**Europäisches Patentamt**

**European Patent Office**

**Office européen des brevets**

(19)

(11) Veröffentlichungsnummer : **0 367 045 B1**

(12) # EUROPÄISCHE PATENTSCHRIFT

(45) Veröffentlichungstag der Patentschrift :
10.04.91 Patentblatt 91/15

(51) Int. Cl.$^5$ : **E06B 3/66**

(21) Anmeldenummer : **89119504.2**

(22) Anmeldetag : **20.10.89**

(54) **Vorrichtung zur Vermeidung der Konvektion im Zwischenraum von Doppelverglasungen oder doppelwandigen Bauteilen.**

(30) Priorität : **04.11.88 DE 3837428**

(43) Veröffentlichungstag der Anmeldung :
**09.05.90 Patentblatt 90/19**

(45) Bekanntmachung des Hinweises auf die
Patenterteilung :
**10.04.91 Patentblatt 91/15**

(84) Benannte Vertragsstaaten :
**AT BE CH DE ES FR GB GR IT LI LU NL SE**

(56) Entgegenhaltungen :
**EP-A- 0 030 246**
**EP-A- 0 142 596**
**DE-A- 2 358 892**
**US-A- 4 436 084**

(73) Patentinhaber :
**FRAUNHOFER-GESELLSCHAFT ZUR
FÖRDERUNG DER ANGEWANDTEN
FORSCHUNG E.V.
Leonrodstrasse 54
W-8000 München 19 (DE)**

(72) Erfinder : **Schmid, Jürgen, Dr.
Winzerstrasse 34
W-7801 Schallstadt (DE)**

(74) Vertreter : **Münich, Wilhelm, Dr. et al
Kanzlei Münich, Steinmann, Schiller
Willibaldstrasse 36/38
W-8000 München 21 (DE)**

EP 0 367 045 B1

## Beschreibung

Die Erfindung betrifft eine Vorrichtung zur Vermeidung der Konvektion im Zwischenraum von Doppelverglasungen oder doppelwandigen Bauteilen gem. dem Oberbegriff des Anspruchs 1, wie sie beispielsweise aus der DE 30 50 807 bekannt ist.

Die Verbesserung der Wärmedämmeigenschaften transparenter Bauteile kann durch die Kombination zweier Maßnahmen erreicht werden : die Reduzierung des Energietransports infolge von Wärmestrahlung läßt sich durch reflektierende Beschichtung erreichen und die Unterdrückung des konvektiven Wärmetransports durch die Schaffung von konvektionsdichten Zwischenräumen. Die Wirksamkeit dieser Maßnahmen kann gut am Beispiel des Fensters demonstriert werden, wo durch Einführen einer für die Wärmestrahlung reflektierenden Folie in den Luftzwischenraum zwischen den Gläsern (Abstand 5 cm) die Wärmeverluste auf ein Drittel gesenkt werden können. Dies ist aber nur möglich, wenn diese Folie die durch sie geschaffenen beiden Zwischenräume auch konvektionsdicht abschließt. In der Vergangenheit wurden viele Versuche unternommen, wirkungsvolle Maßnahmen zum konvektionsdichten Abschluß von z.B. Rollos durchzuführen. Als Beispiele seien genannt : Bürstendichtung, Magnetdichtung, schließbare Klemmvorrichtungen und sehr enge Spalte. Enge Spalte mit Spaltweiten um 200 μ und Spalttiefen um 20 mm erbrachten ausgezeichnete Ergebnisse bezüglich der Dichtfunktion. In der Praxis erforderte diese Technik jedoch eine sehr große Präzision der Rolloführung. Trotz dieser Maßnahmen konnte nicht ausgeschlossen werden, daß vereinzelt Verklemmungen der Rollos infolge von Fertigungstoleranzen oder Dehnungen unterschiedlicher Bauteile auftraten.

Gegenstand der vorliegenden Erfindung ist es, eine hochwirksame Abdichtung für Vorrichtungen gem. dem Oberbegriff des Anspruchs 1 zu schaffen, ohne die Nachteile eines engen Spaltes bezuglich Fertigungstoleranzen und Betriebssicherheit.

Diese Aufgabe wird erreicht durch die Vorrichtung nach Anspruch 1 und zwar durch eine geeignete Ausnutzung von unterschiedlichen Luftdrucken, die in den einzelnen Kammern infolge von Temperaturunterschieden entstehen.

Nach Anspruch 2 wird diese Aufgabe vorteilhaft gelöst für Rollos.

Durch die Maßnahmen nach Anspruch 3 wird erreicht, daß das untere Ende des Rollos gegen die Dichtkante gepreßt wird, wobei die technische Lösung einfach und im Fensterrahmen leicht zu bewerkstelligen ist.

Die Ausbildung der Vorrichtung nach Anspruch 4 ist besonders geeignet für die Altbausanierung, wo Rollos bereits im Fensterkasten vorhanden sind.

Die Maßnahmen nach Anspruch 5 bewirken, daß die Dichtung durch die Folie wirksam unterstützt wird.

Für doppelwandige Bauteile, z.B. Solarkollektoren, ist es nicht nötig, daß der Zwischenraum wirklich durchsichtig ist. Hier wird mehr Wert auf die effektive Wärmedämmung gelegt. Die Maßnahmen nach den Ansprüchen 6-8 bewirken eine erhebliche Verbesserung der Wärmedämmung, da die Kapillaren der Wärmedämmschicht technisch schwierig zu verschließen sind und auf diese elegante Weise die Konvektion selbst durch die Dämmschicht wirksam verhindert wird.

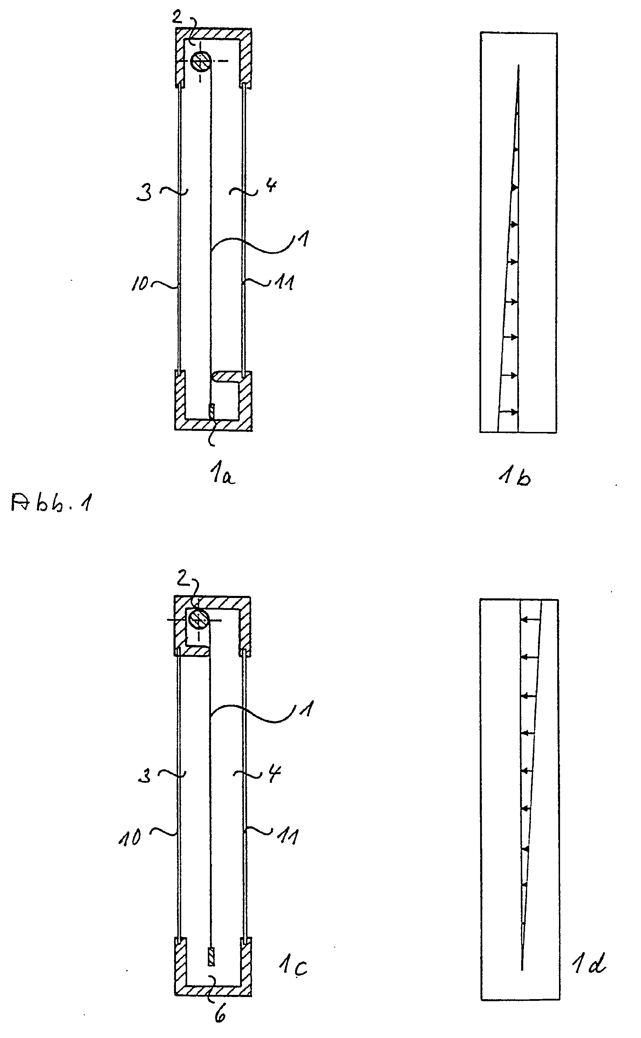

Die Funktionsweise sei anhand von Abb. 1a erklärt. Dargestellt ist die Situation in einem Verbundfenster mit einer inneren 11 und äußeren 10 Glasscheibe und einem dazwischenliegenden geschlossenen Rollosystem 2. Links befindet sich die Außenatmosphäre mit der kalten Luft im Außenraum 3, rechts die Innenscheibe zum Raum 4 mit der wärmeren Luft.

Unter der Annahme, daß das Rollo unten dicht abgeschlossen ist, bilden sich zwei Luftsäulen mit unterschiedlicher Temperatur ; die linke Luftsäule enthält kältere Luft, die rechte Luftsäule enthält wärmere Luft. Durch die offene Verbindung zwischen den beiden Räumen oberhalb der Rollowelle erfolgt an dieser Stelle ein Druckausgleich, so daß die Luftsäule links und rechts oben den gleichen Druck besitzt. Der Druckaufbau der beiden Luftsäulen erfolgt nach unten unterschiedlich und zwar erfolgt ein Druckaufbau in der kälteren Luft infolge ihrer größeren Dichte und das führt zu einem Differenzdruckaufbau, wie er in Abb. 1b dargestellt ist.

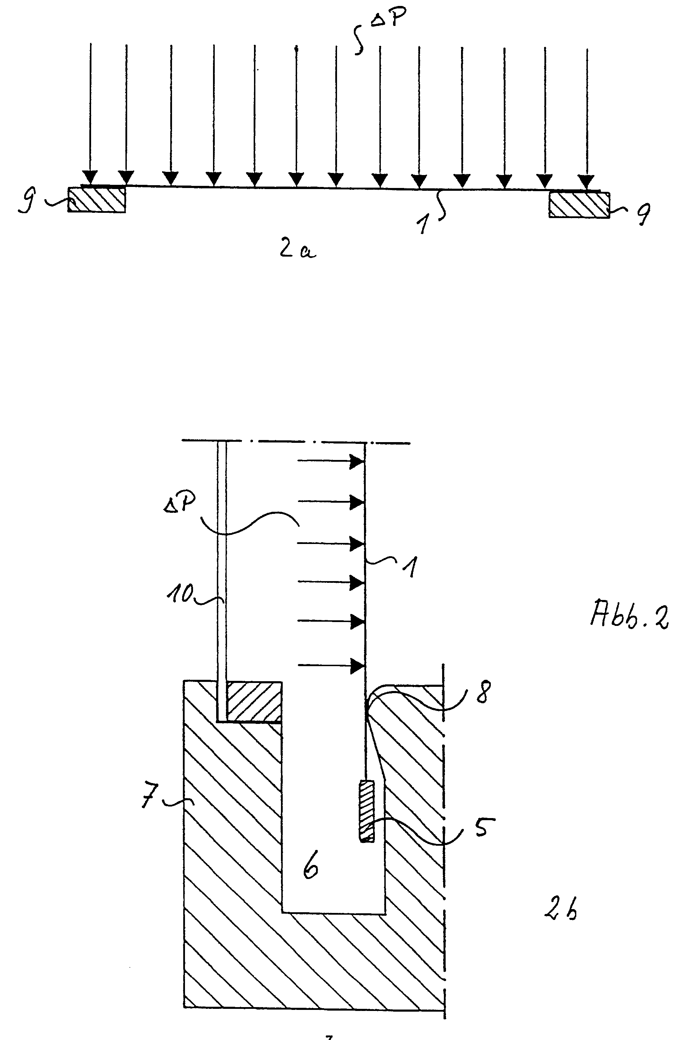

Man bekommt damit einen zunehmenden Verlauf des Differenzdruckes nach unten und dieser Differenzdruck wird ausgenutzt, um das Rollo gegen eine Dichtkante zu pressen. Diese Dichtkante ist dargestellt in Abb. 2a als horizontaler Schnitt und in Abb. 2b im Bereich der unteren Abdichtung, wo das Rollo mit seiner unteren Gewichtsleiste 5 über eine Dichtkante 8 abgesenkt wird, dann wird der Differenzdruck das Rollomaterial 1 gegen die Dichtkante 8 drücken und somit den dichten Abschluß gewährleisten. Das bedeutet, daß in der Praxis der in Abb. 1a angedeutete dichte Abschluß nicht von Anfang an da ist, sondern erst erscheint, wenn sich ein gewisser Differenzdruck aufgebaut hat. In der Praxis hat sich jedoch gezeigt, daß die wirksame Ausbildung dieser Differenzdrucke bereits beginnt, bevor ein sehr dichter oder Abschluß erfolgt und das Rollo nach einer bis zwei Minuten fest anliegt.

Je nach technischer Ausbildung der transparenten Elemente bzw. Fenster kann es notwendig sein, die Druckkräfte einmal in die eine oder in die andere Richtung wirksam werden zu lassen. Abb. 1c zeigt, wie sich die Druckkräfte durch die Verlegung der offenen Verbindung in den unteren Bereich umdrehen lassen. Es herrscht dann, wegen dieser Verbindung, im unteren Bereich Druckgleichheit und die Druckabnahme ist entsprechend der größeren Dichte der kälteren Luft im kälteren Bereich stärker als im wärmeren. Es bildet sich dann ein Differenzdruckverlauf gem. Abb. 1d aus.

Die Wirkunsweise dieses "Dichtmachens" entspricht den Bedürfnissen eines Rollobetriebs in nahezu idealer Weise : Während des Rollobetriebs (auf oder ab) existieren noch keine abgeschlossenen Zwischenräume. Es gibt demnach auch keinen Differenzdruck. Das Rollo gleitet damit auf seiner Auflageleiste 9 ohne jede Reibung in beide Richtungen und fängt erst dann sich anzulegen, wenn es seine endgültige geschlossene Endstellung erreicht hat. Der Öffnungsvorgang aus dem geschlossenen Zustand führt zu einer raschen Ausbildung eines Spaltes in der unteren Zone, der sofort einen Druckausgleich zwischen den beiden Luftsäulen schafft und damit die Druckkräfte, die das Rollo auf die Auflageflächen pressen, eliminieren. Ab diesem Zeitpunkt gleitet das Rollo wieder ohne Reibung nach oben.

Im Gegensatz zum engen Spalt existieren für die Rolloführung keinerlei enge Toleranzen und es erscheint nahezu ausgeschlossen, daß sich eine Situation ergibt, indem das Rollo klemmt. Es wurden solche Rollos gebaut und es hat sich im Versuchsbetrieb gezeigt, daß das Verhalten der Rollos exakt diesen Beschreibungen entspricht.

Durch die Erfindung wird damit erreicht, daß erstmalig ein hochwirksames Wärmeschutzrollo zur Verfügung steht, das eine sehr hohe Betriebszuverlässigkeit besitzt.

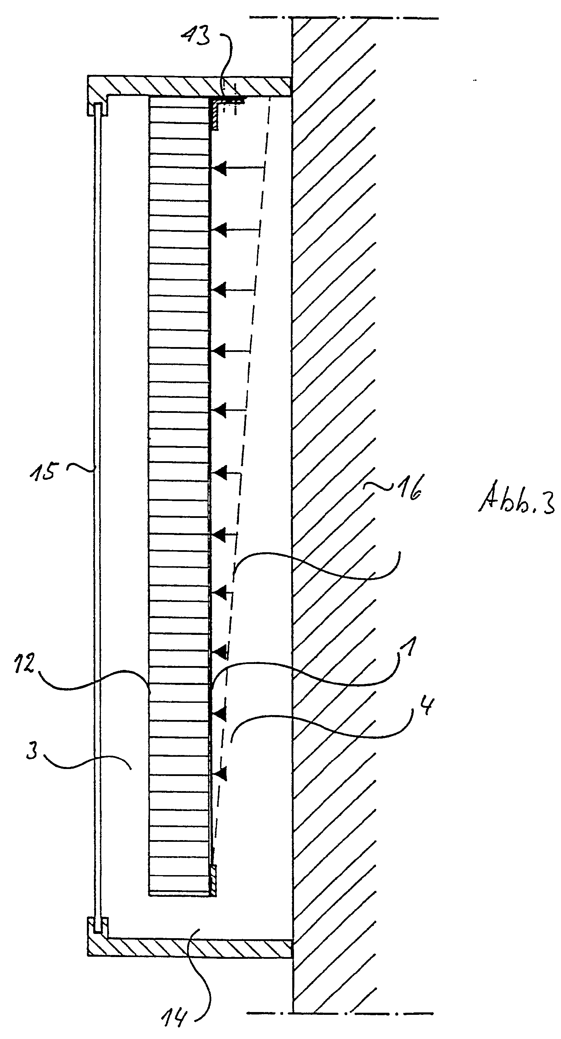

Diese Art von Rollos läßt sich nicht nur im Fensterbereich sondern auch in anderen Einrichtungen zur transparenten Wärmedämmung anwenden, da auch dort die Erhöhung der Betriebszuverlässigkeit von großer Bedeutung ist. Diese aerostatische Dichtung ist besonders wirksam beim einseitigen Abschluß von Kapillarstrukturen für transparente Wärmedämmsysteme. Die in Abb. 3 dargestellte Kapillarstruktur 12 mit einem hinteren 4 und vorderen 3 Luftraum in einem doppelwandigen Bauteil mit einer äußeren transparenten Abdeckung 15, das auf der Wand 16 angebracht ist, z.B. einem Kollektorabsorber oder dunkel gefärbten Hauswand, kann nur dann wirksam werden, wenn die Luftkonvektion durch die Kapillaren zwischen den beiden Lufträumen wirksam unterbunden wird. Dies kann man durch Verstopfen der Kapillaren erreichen. Die Herstellerfirmen versuchen diese Kapillarstruktur einseitig mit einer Folie zu kaschieren. Offensichtlich ist das aber eine technologisch anspruchsvolle Aufgabe, denn bis heute gibt es noch kein technisch einwandfreies Produkt. Ein zuverlässiger Abschluß dieser Kapillaren ist in Abb. 3 dargestellt.

Hierbei wird eine sehr dünne, biegeschlaffe Folie 1 im oberen Bereich 13 des Elements befestigt und im unteren Bereich 14 eine offene Verbindung analog wie bei den Rollos zwischen den beiden Luftzwischenräumen geschaffen, der sich dann analog ausbildende.

Differenzialdruck $\Delta P$ drückt die hintere Folie so gegen die Kapillarstruktur, daß eine sichere Abdichtung gegen konvektive Luftströme gewährleistet ist.

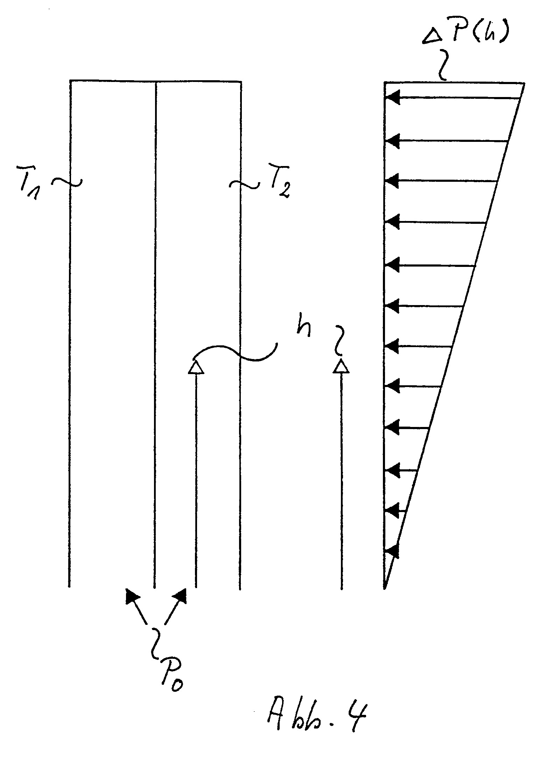

Die mathematische Herleitung der durch die unterschiedlichen Temperaturen der Luftsäule herrührenden Differenzdrucke, wird im folgenden anhand der Abb. 4 gezeigt.

Herleitung des Differenzdrucks

Die Druckgleichung in den Teilräumen lautet :

1) $\Delta P(h) = g \cdot h \, (\delta 1 - \delta 2)$

2) mit $\delta 1/\delta 2 = T2/T1$ wird $\delta 2 = \delta 1 \cdot T1/T2$

3) in 1) eingesetzt ergibt sich :

$\Delta P(h) = g \cdot h \, (\delta 1 - \delta 1 \cdot T1/T2)$

$= g \cdot h \cdot \delta 1 \, (1 - T1/T2)$

unter der Annahme, daß $\delta 1 \approx \delta_0$

(Dichte im Zwichenraum etwa = Dichte eines Mittelwertes zwischen Innen- und Außentemperatur) ergibt sich :

$$\Delta P(h) = g \cdot h \cdot \varrho_0 \, (1 - T1/T2)$$

mit T1 bzw. T2 = Temperatur in Kelvin

Rechenbeispiel
Temp. im kalten Zwischenraum = 5°C $\triangleq$ 278 K
Temp. im warmen Zwischenraum = 12°C $\triangleq$ 288 K
g = 9,81 m/2
$\delta_0$ = 1,27 kg/m³
h = 1 m
damit ergibt sich

$$\triangle P = \frac{9,81 \cdot 1 \cdot 1,27\ N}{m \cdot m}\ (1 - 278/288)$$

$$= 12,5\ N/m^2\ (1 - 0,965)$$

$$\boxed{\triangle P = 0,43\ N/m^2\ (0,43\ Pa)}$$

$$\triangleq 43\ g/m^2\ \text{Druckkraft}$$

Diese Kraft genügt nach den durchgeführten Versuchen die Folie an die Dichtleiste anzupressen.

## Ansprüche

1. Vorrichtung zur Vermeidung der Konvektion im Zwischenraum von Doppelverglasungen oder doppelwandigen Bauteilen, von denen eine Wand transparent ist, wobei in dem Zwischenraum eine transparente Folie oder ein transparentes Rollo, die bzw. das diesen Zwischenraum in einen kalten Außenraum und einen wärmeren Innenraum trennt, sowie im Rahmen eine Führung für die Folie oder das Rollo vorgesehen sind, **dadurch gekennzeichnet,** daß die Führung sowie die Anordnung der Folie (1) oder der Rollos (2) derart ausgebildet sind, daß die Dichtung zwischen dem Außenraum (3) und dem Innenraum (4) durch aerostatische Kräfte erfolgt.

2. Vorrichtung nach Anspruch 1, **dadurch gekennzeichnet,** daß entweder oben oder unten ein Spalt vorgesehen ist, der die beiden Räume (3, 4) verbindet und die restlichen Seiten durch die aerostatischen Kräfte auf die Folie oder das Rollo abdichtbar sind.

3. Vorrichtung nach den Ansprüchen 1 und 2, **dadurch gekennzeichnet,** daß das Ende (5) der Folie bzw. Rollo von einer Ausnehmung (6) im Rahmen (7) aufnehmbar ist und die untere Dichtung über eine Lippe (8), die in der Ebene der seitlichen Dichtleisten (9) liegt, erfolgt.

4. Vorrichtung nach einem der Ansprüche 1 bis 3, **dadurch gekennzeichnet,** daß das Rollo oberhalb der Dichtebene angeordnet ist.

5. Vorrichtung nach einem der Ansprüche 1 bis 4, **dadurch gekennzeichnet,** daß die Dichtleisten (9) eben oder abgerundet ausgebildet sind und eine glatte Oberfläche besitzen.

6. Vorrichtung nach Anspruch 1, **dadurch gekennzeichnet,** daß in dem Zwischenraum eine transparente Wärmedämmschicht angeordnet ist.

7. Vorrichtung nach Anspruch 6, **dadurch gekennzeichnet,** daß die Wärmedämmschicht eine Honigwaben-, Röhrchen- oder andere Hohlraumstruktur aufweist, deren Öffnungen durch die Folie oder das Rollo wenigstens auf einer Seite verschließbar sind.

8. Vorrichtung nach den Ansprüchen 6 bis 8, **dadurch gekennzeichnet,** daß das Bauteil ein Sonnenkollektor oder eine transparent wärmegedämmte Gebäudewand ist.

9. Vorrichtung nach den Ansprüchen 1-5 **dadurch gekennzeichnet,** daß das Ende (5) der Folie bzw. des Rollos beschwert ist.

## Claims

1. Device for preventing convection in the interior of double glazings or double-walled construction parts whereof one wall is transparent, with a transparent film or a transparent blind being provided to divide said interior into a cold outside space and a warmer inside space, and a guide for said film or said blind being provided in the frame, **characterized in** that said guide as well as the arrangement of said film (1) or said blind (2) are so designed that the sealing between said outside space (3) and said inside (4) is effected by aerostatic forces.

2. Device according to Claim 1 **characterized in** that either at the top or at the bottom a gap is provided to interconnect said two spaces (3, 4), and that the remaining sides are adapted to be sealed against said film or said blind by the aerostatic forces.

3. Device according to Claims 1 and 2 **characterized in** that the end (5) of said film or blind is adapted to be received in a recess (6) in the frame (7), and that the lower seal is effected by means of a packing washer (8) disposed in the plane of the lateral packing strips (9).

4. Device according to any of Claims 1 to 3, **characterized in** that said blind is disposed above the sealing plane

5. Device according to any of Claims 1 to 4, **characterized in** that said packing strips (9) or of a planar or a rounded-off design and present a smooth surface.

6. Device according to Claim 1, **characterized in** that a transparent thermal insulation layer is disposed in said interior space.

7. Device according to Claim 6, **characterized in** said thermal insulation layer presents a honeycomb, capillary or any other cellular structure whose apertures are adapted to be closed at least on one side by said film or said blind.

8. Device according to Claims 6 to 8, **characterized in** that said construction element is a solar collector or a transparent thermally insulated wall of a building.

9. Device according to Claims 1 to 5, **characterized in** that the end (5) of said film or said blind is loaded with a weight.

## Revendications

1. Dispositif pour éviter la convection à l'intérieur de double vitrage ou d'autres éléments de construction à double paroi dont l'une est transparente, un film transparent ou un store transparent qui divise ledit intérieur en un espace extérieur froid et un espace intérieur plus chaud, étant disposé dans ledit intérieur pendant qu'un guide pour ledit film ou ledit store est pourvu dans le cadre, **caractérisé en ce** que ledit guide ainsi que l'arrangement dudit film (1) ou dudit store (2) sont si conçus que l'étanchéité entre ledit espace extérieur (3) et ledit espace intérieur (4) soit produite par des forces aérostatiques.

2. Dispositif selon la Revendication 1, **caractérisé en ce** qu'une fente est pourvue soit en haut ou en bas qui relie lesdits espaces (3, 4) entre eux, et en ce que les autres côtés sont conçus pour être rendus étanches contre ledit film ou ledit store par les forces aérostatiques.

3. Dispositif selon quelconque des Revendications 1 et 2, **caractérisé en ce** que l'extrémité (5) dudit film ou store est adaptée à reçue dans un creux (6) dans ledit cadre (7), et en ce que l'étanchéité en bas se fait au moyen d'une lèvre (8) disposée dans le plan des rebords d'étanchéité latéraux (9).

4. Dispositif selon quelconque des Revendications 1 à 3, **caractérisé en ce** que ledit store est disposé en dessus du plan d'étanchéité.

5. Dispositif selon quelconque des Revendications 1 à 4, **caractérisé en ce** que lesdits rebords d'étanchéité (9) sont planaires ou arrondis et présentent une surface lisse.

6. Dispositif selon la Revendication 1, **caractérisé en ce** qu'une couche calorifuge transparente est disposée dans ledit intérieur.

7. Dispositif selon la Revendication 6, **caractérisé en ce** que ladite couche calorifuge est d'une structure en nid d'abeilles, capillaire ou d'une autre structure cellulaire dont les ouvertures se peuvent fermer, au moins d'un côté, par ledit film ou ledit store.

8. Dispositif selon les Revendications 6 à 8, **caractérisé en ce** que l'élément de construction est un collecteur solaire ou un mur de bâtiment transparent à isolation thermique.

9. Dispositif selon les Revendications 1 à 5, **caractérisé en ce** que l'extrémité (5) dudit film ou dudit store est chargée.

1a

1b

Abb. 1

1c

1d

Abb. 2

Abb.3

$\Delta P(h)$

$T_1$ ~          ~ $T_2$

$h$

$P_0$

Abb. 4